# EUROPÄISCHE PATENTSCHRIFT

(11) **EP 3 947 065 B1**
(45) Veröffentlichungstag und Bekanntmachung des Hinweises auf die Patenterteilung: **25.09.2024**
(21) Anmeldenummer: 20723270.3
(22) Anmeldetag: 06.04.2020
(51) Int. Cl.: B60T 7/04, B60T 7/20, B60T 8/24, B60T 13/58

(54) **VORRICHTUNG UND VERFAHREN ZUM ABBREMSEN EINES ANHÄNGERFAHRZEUGS**
DEVICE AND METHOD FOR BRAKING A TRAILER
DISPOSITIF ET PROCEDÉ DE FREINAGE POUR UN VEHICULE TRACTÉ

(30) Priorität: 05.04.2019 DE 102019002497
(43) Veröffentlichungstag der Anmeldung: 09.02.2022
(73) Patentinhaber: Suffel Fördertechnik GmbH & Co. KG, 63741 Aschaffenburg (DE)
(72) Erfinder: WILLENBÜCHER, Michael, 64760 Oberzent (DE); HOFMANN, Claus, 63808 Haibach (DE)
(74) Vertreter: Nitz, Astrid
(86) Internationale Anmeldenummer: PCT/DE2020/000075
(87) Internationale Veröffentlichungsnummer: WO 2020/200347

(56) Entgegenhaltungen:
- EP-A1- 3 300 975
- EP-A2- 0 066 677
- DE-A1- 102014 100 069
- DE-A1- 102016 103 920
- DE-A1- 2 500 420
- DE-U1- 29 920 285

## Beschreibung

Die Erfindung betrifft eine Vorrichtung zum Beschleunigen, insbesondere Abbremsen nach dem Oberbegriff von Anspruch 1 und ein Verfahren zum Beschleunigen nach dem Oberbegriff von Anspruch 9.

Druckluftbremsanlagen für Flurförderzeuge werden im Stand der Technik benötigt, um schwere Anhängerfahrzeuge sicher verfahren zu können, insbesondere im innerbetrieblichen Verkehr. Die Anhängerfahrzeuge verfügen über eine Druckluftbremse, da die Druckluftbremse ab einer gewissen Tonnage vorteilhaft ist. Je nach Ausführung des Anhängerfahrzeugs kann dieses ohne eine Druckluftbremsanlage am Zugfahrzeugs nicht gezogen werden, da die Bremsen ohne Druckluft nicht geöffnet werden können. Im Bereich der Flurförderzeuge wird eine Druckluftbremsanlage zum Bremsen eines Anhängerfahrzeugs üblicherweise mit einem Handsteuerventil für den Fahrer im Zugfahrzeug ausgestattet. Dieses Handsteuerventil sitzt in der Fahrzeugkabine und muss vom Bediener feinfühlig gesteuert werden. Der Bediener versucht die Abbremsung des Anhängerfahrzeugs durch Betätigung des Handsteuerventils an die Abbremsung des Zugfahrzeugs anzupassen. Der Gesamtzug umfassend aus Zugfahrzeug und Anhängerfahrzeug lässt sich so jedoch nur bedingt angepasst steuern, da beispielsweise die Abbremsung des Zugfahrzeugs während des Bremsvorgangs nur selten der Abbremsung des Anhängerfahrzeugs entspricht.

DE 25 00 420 offenbart eine Anhängerbremssteuerung an Zugfahrzeugen, wobei eine Schaltung mittels eines Steuerhebels erfolgt.

Aufgabe der vorliegenden Erfindung ist es, eine zuverlässige Vorrichtung zur Abbremsung eines Anhängerfahrzeugs bereitzustellen, die die Nachteile des Stands der Technik vermeidet.

Die Aufgabe wird gelöst durch eine Vorrichtung zum Beschleunigen, insbesondere Abbremsen, eines Anhängerfahrzeugs, das durch eine Pneumatikbremse gebremst ist, durch ein von einem Hydrauliksystem angetriebenes Zugfahrzeug, insbesondere einen Gabelstapler und/oder LKW und/oder Traktor, umfassend eine Hydraulikpumpe, die mit zumindest einem Hydraulikmotor über Druckleitungen, insbesondere eine als Zulaufleitung der Hydraulikflüssigkeit und eine als Rücklaufleitung der Hydraulikflüssigkeit, verbunden ist, wobei Antriebsräder des Zufahrzeugs durch die Hydraulikmotoren antreibbar sind, wobei zumindest ein Drucksensor an einer Druckleitung vorgesehen ist, durch den Drucksensordaten abzunehmen und an ein Anhängersteuerungsmittel, insbesondere umfassend ein Anhängersteuerventil, für die Pneumatikbremse des Anhängerfahrzeugs weitergebbar sind, insbesondere für eine mit einem Bremsbetrieb des Zugfahrzeugs korrespondierende Abbremsung der Pneumatikbremse des Anhängerfahrzeugs, wobei die Zulaufleitung der Hydraulikflüssigkeit bei Bremsbetrieb des Zugfahrzeugs einen im Wesentlichen konstanten Niedrigdruck aufweist.

Die Erfindung ermöglicht eine automatische Ansteuerung eines Anhängersteuerventils für Druckluftbremsanlagen in Abhängigkeit der Abbremsung des Zugfahrzeugs. Die Ansteuerung des Anhängersteuerventils für druckluftgebremste Anhängerfahrzeuge wird vorteilhaft und sicher in Abhängigkeit des hydraulischen Bremsdrucks des Zugfahrzeugantriebssystems durchgeführt. Ein hydrostatischer Fahrantrieb weist als Antrieb beispielhaft einen Verbrennungs- oder Elektromotor auf, der eine Hydraulikpumpe antreibt. Die Hydraulikpumpe ist je nach Ausführung mit einem oder zwei Hydraulikmotoren über Leitungen für den Hydraulikölfluss verbunden, die entweder direkt oder über ein Getriebe mit den Antriebsrädern verbunden sind. Je nach Fahrtrichtung ändert sich die Ölflussrichtung und die Druckverhältnisse im System. Im hydraulischen Antriebssystem ist zumindest ein Drucksensor zur Ermittlung des Bremsdrucks, insbesondere eines Drucks in der Rücklaufleitung, je nach Fahrtrichtung, vorgesehen. Durch diesen Sensor wird auf einfache Weise die Abbremsung des Zugfahrzeugs in Abhängigkeit des Drucks ermittelt. Der verbaute Sensor sendet Signale an ein Steuergerät des Anhängerbremssystems. Dieses Steuergerät dient als Umsetzer/übersetzer zur im wesentlichen proportionalen Ansteuerung eines Anhängersteuerventils für die Pneumatikbremse, ohne dass eine Fahrer händisch eingreifen müsste. Das Übersetzungsverhältnis ist proportional zueinander, durch einen hohen Rücklaufdruck wird eine hohe Abbremsung ermöglicht. Die Erfindung ermöglicht somit eine sichere proportionale Ansteuerung des Anhängersteuerventils für druckluftgebremste Anhängerfahrzeuge bei Reduzierung der Fahrgeschwindigkeit im Zugfahrzeug ohne separate Betätigung eines Stellteils, insbesondere Handsteuerventil, zur Ansteuerung des Anhängersteuerventils. Hierdurch wird die zuverlässige Anpassung der Bremsverzögerung im Anhängerfahrzeug nahezu identisch der Bremsverzögerung im Zugfahrzeug ermöglicht, und ein Ausschluss von Fehlbetätigungen erreicht.

Vorteilhaft ist dabei weiterhin ein Schutz des hydraulischen Fahrantriebs des Zugfahrzeugs durch Vermeidung von gleichzeitiger Antriebsleistung des Fahrantriebs und irrtümlichen Bremsens des Anhängers sowie Reduzierung von Druckspitzen und Schubkräfteübertragung vom Anhängerfahrzeug in das Zugfahrzeug. Weiterhin ermöglicht die erfindungsgemäße Vorrichtung eine Vermeidung von Drehzahlanhebung durch Schubkräfteübertragung vom Anhängerfahrzeug in das Zugfahrzeug. Die erfindungsgemäße Vorrichtung stellt eine Voreilung im Anhängerbremssystem sicher und dadurch immer einen gestreckten Zugverbund von Zugfahrzeug und Anhängerfahrzeug durch eine optimale Ansteuerung des Anhängerbremsventils.

Vorteilhaft ist es, wenn zumindest ein Drucksensor an der Rücklaufleitung der Hydraulikflüssigkeit bei Bremsbetrieb des Zugfahrzeugs vorgesehen ist, wobei die Druckwerte des Drucksensors im Wesentlichen proportional zu der Abbremsung des Zugfahrzeugs ausgebildet sind und eine im Wesentlichen linear proportionale Drucksteuerung bei Pneumatikbremse des Anhängerfahrzeugs zu vermitteln ist. Vorteilhaft ist es, wenn die Zulaufleitung der Hydraulikflüssigkeit bei Bremsbetrieb des Zugfahrzeugs einen im Wesentlichen konstanten Niedrigdruck aufweist. Vorteilhaft ist es, wenn jeweils zumindest ein Drucksensor an einer Rücklaufleitung der Hydraulikflüssigkeit bei Bremsbetrieb des Zugfahrzeugs in Vorwärtsrichtung und/oder in Rückwärtsrichtung vorgesehen ist.

Vorteilhaft ist es, wenn bei Abbremsung des Zugfahrzeugs bei Vorwärtsfahrt ein Drucksensor an einer ersten Rücklaufleitung und/oder bei Rückwärtsfahrt ein Drucksensor an einer zweiten Rücklaufleitung vorgesehen ist.

Vorteilhaft ist es, wenn jeweils Messdaten eines Drucksensors an der Rücklaufleitung als Drucksensordaten abzunehmen und an das Anhängersteuerungsmittel für die Pneumatikbremse des Anhängerfahrzeugs weitergebbar sind mittels eines Datensendemittels, insbesondere einer Datensendeleitung, für eine entsprechend der Zugfahrzeugabbremsung entsprechenden Abbremsung der Pneumatikbremse des Anhängerfahrzeugs.

Vorteilhaft ist es, wenn ausgehend vom Anhängersteuerventil eine Vorratsleitung und eine Steuerleitung vorgesehen sind.

Vorteilhaft ist es, wenn die Hydraulikpumpe mittels eines Antriebsmotors anzutreiben ist.

Die Aufgabe wird ebenfalls gelöst durch ein Verfahren zum Abbremsen eines Anhängerfahrzeugs, das durch eine Pneumatikbremse gebremst wird, unter Verwendung einer Vorrichtung zum Abbremsen eines Anhängerfahrzeugs, insbesondere nach einem der Ansprüche 1 bis 8, das durch eine Pneumatikbremse gebremst wird, durch ein von einem Hydrauliksystem angetriebenes Zugfahrzeug, insbesondere einen Gabelstapler und/oder LKW und/oder Traktor, umfassend eine Hydraulikpumpe, die mit zumindest einem Hydraulikmotor über Druckleitungen, insbesondere eine als Zulaufleitung der Hydraulikflüssigkeit und eine als Rücklaufleitung der Hydraulikflüssigkeit, verwunden werden, wobei Antriebsräder des Zugfahrzeugs durch die Hydraulikmotoren angetrieben werden, wobei zumindest ein Drucksensor an einer Druckleitung vorgesehen ist, durch den Drucksensordaten abgenommen werden und an ein Anhängersteuerungsmittel, insbesondere umfassend ein Anhängersteuerventil, für die Pneumatikbremse des Anhängerfahrzeugs weitergegeben werden für eine mit einem Bremsbetrieb des Zugfahrzeugs korrespondierende Abbremsung der Pneumatikbremse des Anhängerfahrzeugs.

Vorteilhaft ist es, wenn bei Abbremsung bei Vorwärtsfahrt von einem Drucksensor an einer ersten Rücklaufleitung und bei Rückwärtsfahrt von einem Drucksensor an einer zweiten Rücklaufleitung ein Vorwärtsfahrtsbremssignal und/oder ein Rückwärtsfahrtsbremssignal an eine Steuerungseinheit des Anhängersteuerungsmittels übermittelt wird.

Weitere Merkmale und Vorteile der Erfindung ergeben sich aus den Ansprüchen und der nachstehenden Beschreibung, in der Ausführungsbeispiele des Gegenstands der Erfindung in Verbindung mit den Zeichnungen näher erläutert sind.

Es zeigen:
- Fig. 1a: eine schematische Darstellung der erfindungsgemäßen Vorrichtung,
- Fig. 1b: eine schematische Darstellung der erfindungsgemäßen Vorrichtung und
- Fig. 2: ein schematisches Diagramm.

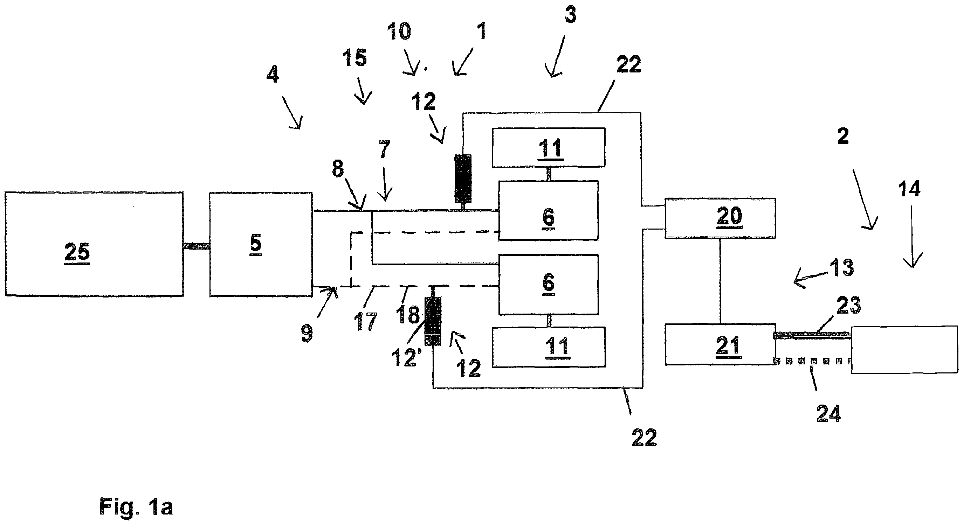

Fig. 1a zeigt eine schematische Darstellung der erfindungsgemäßen Vorrichtung 1, beispielhaft bei einer Beschleunigung, insbesondere Bremsvorgang, in Vorwärtsfahrtrichtung 15 zum Abbremsen eines Anhängerfahrzeugs 2, das durch eine Pneumatikbremse 14 gebremst ist, durch ein von einem Hydrauliksystem 3 angetriebenes Zugfahrzeug 4, insbesondere einen Gabelstapler, umfassend eine Hydraulikpumpe 5, die mit zumindest einem Hydraulikmotor 6 über Druckleitungen 7, insbesondere eine als Zulaufleitung 8 der Hydraulikflüssigkeit und eine als Rücklaufleitung 9 der Hydraulikflüssigkeit, verbunden ist, wobei Antriebsräder 11 des Zugfahrzeugs 4 durch die Hydraulikmotoren 6 antreibbar sind, wobei zumindest ein Drucksensor 12 an einer Druckleitung 7 vorgesehen ist, durch den Drucksensordaten abzunehmen und an ein Anhängersteuerungsmittel 13, insbesondere umfassend ein Anhängersteuerventil 21, für die Pneumatikbremse 14 des Anhängerfahrzeugs 2 weitergebbar sind, insbesondere für eine mit einem Bremsbetrieb 10 des Zugfahrzeugs 4 korrespondierende Abbremsung der Pneumatikbremse 14 des Anhängerfahrzeugs 2, wobei zumindest ein Drucksensor 12 an der Rücklaufleitung 9 der Hydraulikflüssigkeit bei Bremsbetrieb 10 des Zugfahrzeugs 4 vorgesehen ist, wobei die Druckwerte des Drucksensors 12 im Wesentlichen proportional zu der Abbremsung des Zugfahrzeugs 4 ausgebildet sind und eine im Wesentlichen linear proportionale Drucksteuerung bei der Pneumatikbremse 14 des Anhängerfahrzeugs 2 zu vermitteln ist. Hydraulikölflussrichtung und die Druckverhältnisse beim Beschleunigen sind wie beschrieben in Fig. 1a beispielhaft in Vorwärtsfahrtrichtung dargestellt. Druckleitung 9 ist eine Zulaufleitung für Hydrauliköl, auch als Druckleitung bezeichnet. Durch diese werden die Hydraulikmotoren 6 in Rotation versetzt und die Hydraulikmotoren 6 treiben die Antriebsräder 11 an. Durch die Rücklaufleitung 9 läuft das Hydrauliköl wieder zur Hydraulikpumpe zurück. Die Rücklaufleitung 9 hat in der gezeigten Antriebssituation nur einen geringen gleichbleibenden Druck. Wird bei Vorwärtsfahrt 15 der Bremsvorgang eingeleitet, so fällt der Druck in der Zulaufleitung 8 schlagartig auf einen niedrigen gleichbleibenden Wert ab. In der Rücklaufleitung 9 hingegen steigt der Druck schlagartig an. Das Druckniveau ist proportional zu einer Abbremsungsrate des Zugfahrzeugs. Je höher die Abbremsung, desto höher der Druck in der Rücklaufleitung 9.

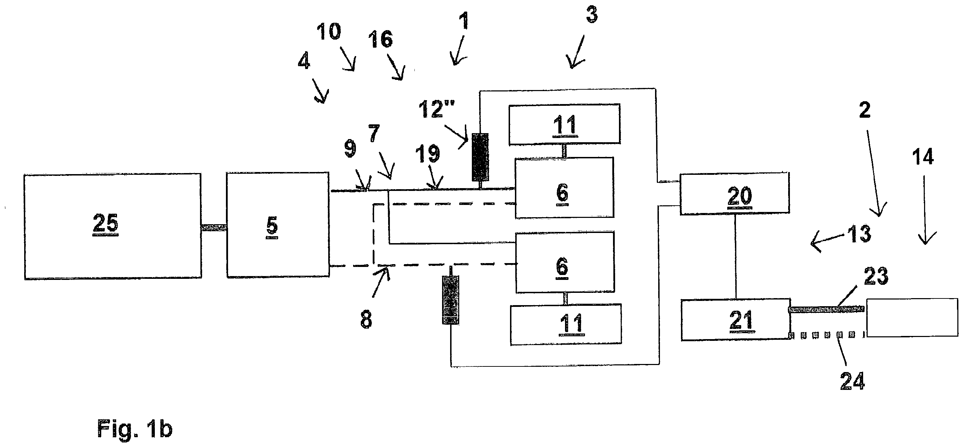

Fig. 1b zeigt eine schematische Darstellung der erfindungsgemäßen Vorrichtung 1, wie in Fig. 1a, in einer Rückwärtsfahrt 16 mit Beschleunigung, insbesondere einem Bremsvorgang 10. Wird mit dem Fahrzeug in Rückwärtsfahrtrichtung beschleunigt, so ändert sich Zulaufleitung 8 und Rücklaufleitung 9 mit gleichbleibendem geringem Druck. Der Drucksensor 12' wird an der Zulaufleitung 8 für Beschleunigungsmessung, insbesondere Bremsen bei Vorwärtsfahrt 15 genutzt, wie in Fig. 1a und Drucksensor 12" für Beschleunigungsmessung, insbesondere Bremsen, bei Rückwärtsfahrt 16.

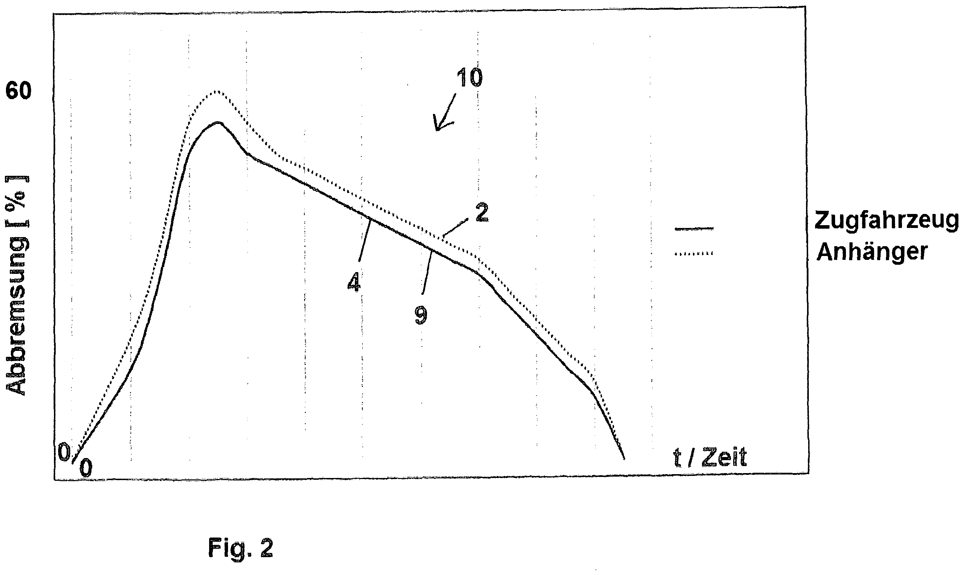

Fig. 2 zeigt ein schematisches Diagramm zur Darstellung des Bremsvorgangs, wobei eine Abbremsrate in % aufgetragen ist über der Zeit der Abbremsung. Die Bremsung des Anhängerfahrzeugs 2 folgt erfindungsgemäß im Wesentlichen proportional der Abbremsung des Zugfahrzeugs 4,

### BEZUGSZEICHENLISTE

- 1: Vorrichtung zum Abbremsen
- 2: Anhängerfahrzeug
- 3: Hydrauliksystem
- 4: Zugfahrzeug
- 5: Hydraulikpumpe
- 6: Hydraulikmotor
- 7: Druckleitung
- 8: Zulaufleitung
- 9: Rücklaufleitung
- 10: Bremsbetrieb
- 11: Antriebsrad
- 12: Drucksensor
- 13: Anhängersteuerungsmittel
- 14: Pneumatikbremse
- 15: Vorwärtsfahrt
- 16: Rückwärtsfahrt
- 17: erste Rücklaufleitung
- 18: Rücklaufleitung bei Vorwärtsfahrt
- 19: zweite Rücklaufleitung
- 20: Steuerungseinheit
- 21: Anhängersteuerungsventil
- 22: Datensendeleitung
- 23: Vorratsleitung
- 24: Steuerleitung
- 25: Antriebsmotor

## Patentansprüche

1. Vorrichtung (1) zum Beschleunigen, insbesondere Abbremsen, eines Anhängerfahrzeugs (2), das durch eine Pneumatikbremse (14) gebremst ist,
durch ein von einem Hydrauliksystem (3) angetriebenes Zugfahrzeug (4), insbesondere einen Gabelstapler und/oder LKW und/oder Traktor, umfassend eine Hydraulikpumpe (5), die mit zumindest einem Hydraulikmotor (6) über Druckleitungen (7), insbesondere eine als Zulaufleitung (8) der Hydraulikflüssigkeit und eine als Rücklaufleitung (9) der Hydraulikflüssigkeit, verbunden ist, wobei Antriebsräder (11) des Zugfahrzeugs (4) durch die Hydraulikmotoren (6) antreibbar sind, wobei zumindest ein Drucksensor (12) an einer Druckleitung (7) vorgesehen ist, durch den Drucksensordaten abzunehmen und an ein Anhängersteuerungsmittel (13), insbesondere umfassend ein Anhängersteuerventil (21) für die Pneumatikbremse (14) des Anhängerfahrzeugs (2), weitergebbar sind, insbesondere für eine mit einem Bremsbetrieb (10) des Zugfahrzeugs (4) korrespondierende Abbremsung der Pneumatikbremse (14) des Anhängerfahrzeugs (2),
wobei die Zulaufleitung (8) der Hydraulikflüssigkeit bei Bremsbetrieb (10) des Zugfahrzeugs (4) einen im Wesentlichen konstanten Niedrigdruck aufweist.

2. Vorrichtung nach Anspruch 1, **dadurch gekennzeichnet, dass** zumindest ein Drucksensor (12) an der Rücklaufleitung (9) der Hydraulikflüssigkeit bei Bremsbetrieb (10) des Zugfahrzeugs (4) vorgesehen ist. wobei die Druckwerte des Drucksensors (12) im Wesentlichen proportional zu der Abbremsung des Zugfahrzeugs (4) ausgebildet sind und eine im Wesentlichen linear proportionale Drucksteuerung der Pneumatikbremse (14) des Anhängerfahrzeugs (2) zu vermitteln ist.

3. Vorrichtung nach einem der Ansprüche 1 bis 2, **dadurch gekennzeichnet, dass** jeweils zumindest ein Drucksensor (12) an einer Rücklaufleitung (9) der Hydraulikflüssigkeit bei Bremsbetrieb (10) des Zugfahrzeugs (4) in Vorwärtsrichtung (15) und/oder in Rückwärtsrichtung (16) vorgesehen ist.

4. Vorrichtung nach einem der Ansprüche 1 bis 3, **dadurch gekennzeichnet, dass** bei Abbremsung des Zugfahrzeugs (4) bei Vorwärtsfahrt (15) ein Drucksensor (12') an einer ersten Rücklaufleitung (17) und/oder bei Rückwärtsfahrt (16) ein Drucksensor (12") an einer zweiten Rücklaufleitung (19) vorgesehen ist.

5. Vorrichtung nach einem der Ansprüche 1 bis 4, **dadurch gekennzeichnet, dass** jeweils Messdaten eines Drucksensors (12) an der Rücklaufleitung (9) als Drucksensordaten abzunehmen und an das Anhängersteuerungsmittel (13) für die Pneumatikbremse (14) des Anhängerfahrzeugs (2) weitergebbar sind mittels eines Datensendemittels, insbesondere einer Datensendeleitung (22), für eine entsprechend der Zugfahrzeugabbremsung entsprechenden Abbremsung der Pneumatikbremse (14) des Anhängerfahrzeugs (2).

6. Vorrichtung nach einem der Ansprüche 1 bis 5, **dadurch gekennzeichnet, dass** ausgehend vom Anhängersteuerventil (21) eine Vorratsleitung (23) und eine Steuerleitung (24) vorgesehen sind.

7. Vorrichtung nach einem der Ansprache 1 bis 6, **dadurch gekennzeichnet, dass** die Hydraulikpumpe (5) mittels eines Antriebsmotors (25) anzutreiben ist.

8. Verfahren zum Beschleunigen, insbesondere Abbremsen, eines Anhängerfahrzeugs (2), das durch eine Pneumatikbremse gebremst wird, unter Verwendung einer Vorrichtung (1) zum Abbremsen eines Anhängerfahrzeugs (2), insbesondere nach einem der Ansprüche 1 bis 7, das durch eine Pneumatikbremse (14) angetrieben wird, durch ein von einem Hydrauliksystem (3) angetriebenes Zugfahrzeug (4), insbesondere einen Gabelstapler und/oder LKW und/oder Traktor, umfassend eine Hydraulikpumpe (5), die mit zumindest einem Hydraulikmotor (6) ober Druckleitungen (7), insbesondere eine als Zulaufleitung (8) der Hydraulikflüssigkeit und eine als Rücklaufleitung (9) der Hydraulikflüssigkeit, verbunden werden, wobei Antriebsräder (11) des Zugfahrzeugs (4) durch die Hydraulikmotoren (6) angetrieben werden, wobei zumindest ein Drucksensor (12) an einer Druckleitung (7) vorgesehen ist, durch den Drucksensordaten abgenommen werden und an ein Anhängersteuerungsmittel (13), insbesondere umfassend ein Anhängersteuerventil (21), für die Pneumatikbremse (14) des Anhängerfahrzeugs (2) weitergegeben werden, insbesondere für eine mit einem Bremsbetrieb (10) des Zugfahrzeugs (4) korrespondierende Abbremsung der Pneumatikbremse (14) des Anhängerfahrzeugs (2).

9. Verfahren nach Anspruch 8, **dadurch gekennzeichnet, dass** bei Abbremsung bei Vorwärtsfahrt (15) von einem Drucksensor (12') an einer ersten Rücklaufleitung (17) und bei Rückwärtsfahrt (16) von einem Drucksensor (12") an einer zweiten Rücklaufleitung (19) ein Vorwärtsfahrtsbremssignal und/oder ein Rückwärtsfahrtsbremssignal an eine Steuerungseinheit (20) des Anhängersteuerungsmittels (13) übermittelt wird.

## Claims

1. Device (1) for accelerating, in particular braking, a trailer vehicle (2), which is braked by a pneumatic brake (14), by a tractor vehicle (4) driven by a hydraulic system (3), in particular a forklift and/or truck and/or tractor, comprising a hydraulic pump (5), which is connected to at least one hydraulic motor (6) via pressure lines (7), in particular one as a supply line (8) of the hydraulic fluid and one as a return line (9) of the hydraulic fluid, wherein drive wheels (11) of the tractor vehicle (4) can be driven by the hydraulic motors (6), wherein at least one pressure sensor (12) is provided on a pressure line (7) to receive data through the pressure sensor and to a trailer control means (13), in particular comprising a trailer control valve (21) for the pneumatic brake (14) of the trailer vehicle (2), In particular for braking of the pneumatic brake (14) of the trailer vehicle (4) which corresponds to a braking operation (10) of the tractor vehicle (4), the supply line (8) of the hydraulic fluid having a substantially constant low pressure during braking operation (10) of the tractor vehicle (4).

2. The device according to claim 1, wherein at least one pressure sensor is provided on the return line (9) of the hydraulic fluid during braking operation (10) of the towing vehicle (4), wherein the pressure values of the pressure sensor (12) are formed substantially proportional to the braking of the towing vehicle (4) and a substantially linear proportional pressure control of the pneumatic brake (14) of the towing vehicle (2) is to be provided.

3. The device according to claim 1 or 2, wherein at least one pressure sensor (12) is provided on a return line (9) of the hydraulic fluid during braking operation (10) of the towing vehicle (4) in the forward direction (15) and/or in the reverse direction (16).

4. The device according one of the claims 1 to 3, wherein during braking of the towing vehicle (4) during forward direction (15), a pressure sensor (12') is provided on a first return line (17) and/or during reverse travel (16), a pressure sensor (12") is provided on a second return line (19).

5. The device according to one of the claims 1 to 4, wherein measurement data of a pressure sensor (12) is to be taken from the return line (9) as pressure sensor data and can be transmitted to the trailer control means (13) for the pneumatic brake (14) of the trailer vehicle (2) by means of a data transmitting means (22) for a braking of the pneumatic brake (14) of the trailer vehicle (2) corresponding to the braking of the trailer vehicle (2).

6. The device according to one of the claims 1 to 5, wherein starting from the trailer control valve (21), a supply line (23) and a control line (24) are provided.

7. The device according to one of the claims 1 to 6, wherein the hydraulic pump (5) is to be driven by means of a drive motor (25).

8. Method for accelerating, in particular braking, a trailer vehicle (2) which is braked by a pneumatic brake, using a device (1) for braking a trailer vehicle (2), in particular according to one of the claims 1 to 7, which is driven by a pneumatic brake (14), by a tractor vehicle (4), in particular a forklift and/or truck and/or tractor, comprising a hydraulic pump (5), which is connected with at least one hydraulic motor (6) to upper pressure lines (7), in particular, one is connected as an inlet line (8) of the hydraulic fluid and one is connected as a return line (9) of the hydraulic fluid, wherein drive wheels (11) of the tractor vehicle (4) are driven by the hydraulic motors (6), wherein at least one pressure sensor (12) is provided on a pressure line (7), through which pressure sensor data are taken and transmitted to a trailer control means (13), in particular comprising a trailer control valve (21), for which pneumatic brake (14) of the trailer vehicle (2) are braked, in particular for braking of the pneumatic brake (14) of the trailer vehicle (2) corresponding to a braking operation (10) of the tractor vehicle (4).

9. Method according to claim 8, **characterized in that** a forward braking signal and/or a reverse braking signal is transmitted to a control unit (20) of the trailer control means (13) by a pressure sensor (12) on a first return line (17) and during reverse driving (16) by a pressure sensor (12) on a second return line (19) a forward braking signal and/or a reverse braking signal is transmitted to a control unit (20) of the trailer control means (13).

## Revendications

1. Dispositif (1) pour l'accélération, notamment le freinage, d'une remorque (2) freinée par un frein pneumatique (14), d'un véhicule tracteur (4), notamment d'un chariot élévateur et/ou d'un camion et/ou d'un tracteur, comprenant une pompe hydraulique (5), munie d'au moins un moteur hydraulique (6) traversant des conduites de pression (7), notamment une conduite d'alimentation (8) du fluide hydraulique et une conduite de retour (9) du fluide hydraulique les roues motrices (11) du véhicule tracteur (4) pouvant être entraînées par les moteurs hydrauliques (6), avec au moins un capteur de pression (12) installé sur une conduite de pression (7), récupéré par le capteur de pression et connecté à un dispositif de commande de la remorque (13), comprenant notamment une soupape de commande de la remorque (21) pour le frein pneumatique (14) de la remorque (2), sont transmissibles, notamment pour un freinage du frein pneumatique (14) de la remorque (2), correspondant à une action de freinage (10) du véhicule tracteur (4), la conduite d'alimentation (8) du liquide hydraulique étant à peu près constante pendant l'actionnement (10) du véhicule tracteur (4).

2. Dispositif selon la revendication 1, **caractérisé par** la présence d'au moins un capteur de pression (12) dans la conduite de retour (9) du liquide hydraulique lors du freinage (10) du véhicule tracteur (4). où les valeurs de pression du capteur de pression (12) sont essentiellement proportionnelles à la décélération du véhicule tracteur (4) et où la commande de pression du frein pneumatique (14) de la remorque (2) est essentiellement linéaire.

3. Dispositif selon l'une des revendications 1 à 2, **caractérisé par** ce dispositif, qu'au moins un capteur de pression (12) soit prévu sur une conduite de retour (9) du liquide hydraulique lorsque le véhicule tracteur (4) est freiné vers l'avant (15) et/ou vers l'arrière (16).

4. Dispositif selon l'une des revendications 1 à 3, **caractérisé par le fait qu'**en cas de freinage du véhicule tracteur (4) en marche avant (15), un capteur de pression (12') est prévu sur une première conduite de retour (17) et/ou, en marche arrière (16), un capteur de pression (12") est prévu sur une seconde conduite de retour (19).

5. Dispositif conforme à l'une des revendications 1 à 4, **caractérisé en ce que** les données mesurées par un capteur de pression (12) situé sur la ligne de retour (9) sont prélevées comme données du capteur de pression et transmises au dispositif de commande de la remorque (13) pour le frein pneumatique (14) de la remorque (2) au moyen d'un moyen de transmission de données, notamment une ligne de transmission de données (22), pour une décélération du frein pneumatique (14) de la remorque (2) correspondant au freinage du véhicule tracteur.

6. Dispositif selon l'une des revendications 1 à 5, **caractérisé en ce qu'**à partir de la soupape de commande de la remorque (21) sont prévues une conduite d'alimentation (23) et une conduite de commande (24).

7. Dispositif suivant l'un des points 1 à 6, **caractérisé par le fait que** la pompe hydraulique (5) est actionnée par un moteur d'entraînement (25).

8. Procédure d'accélération, notamment de freinage, d'une remorque (2) freinée au moyen d'un frein pneumatique, au moyen d'un dispositif (1) de freinage d'une remorque (2), notamment selon l'une des revendications 1 à 7, actionnée au moyen d'un frein pneumatique (14), par un véhicule tracteur (4), notamment un chariot élévateur et/ou un camion et/ou un tracteur, y compris une pompe hydraulique (5) ayant au moins un moteur hydraulique (6) des unités de pression (7), en particulier l'une comme conduite d'admission (8) du fluide hydraulique et l'autre comme conduite de retour (9) du fluide hydraulique, les roues motrices (11) du véhicule tracteur (4) étant entraînées par les moteurs hydrauliques (6) et comportant au moins un capteur de pression (12) sur une conduite de pression (7) par lequel les données du capteur de pression sont recueillies et transmises à un dispositif de commande de la remorque (13), comprenant notamment une soupape de commande de la remorque (21), pour le frein pneumatique (14) de la remorque (2), notamment: une décélération du frein pneumatique (14) de la remorque (2), correspondant à une action de freinage (10) du véhicule tracteur (4).

9. Procédure selon la revendication 8, **caractérisée par le fait qu'**en cas de freinage en marche avant (15) et en marche arrière (16) par un capteur de pression (12') sur une première conduite de retour (17) et en marche arrière (16), par un capteur de pression (12") sur une seconde conduite de retour (19), un signal de freinage en marche avant et/ou un signal de freinage en marche arrière est transmis à une unité de commande (20) du dispositif de commande de la remorque (13).
